(19) Europäisches Patentamt
European Patent Office
Office européen des brevets

(11) Veröffentlichungsnummer: **0 608 009 A1**

(12) **EUROPÄISCHE PATENTANMELDUNG**

(21) Anmeldenummer: **94105426.4**

(22) Anmeldetag: **18.11.88**

(51) Int. Cl.⁵: **A01N 47/36**, //(A01N47/36, 47:06,43:88)

This application was filed on 08 - 04 - 1994 as a divisional application to the application mentioned under INID code 60.

(30) Priorität: **27.11.87 CH 4629/87**

(43) Veröffentlichungstag der Anmeldung: **27.07.94 Patentblatt 94/30**

(60) Veröffentlichungsnummer der früheren Anmeldung nach Art. 76 EPÜ: **0 318 433**

(84) Benannte Vertragsstaaten: **AT BE CH DE ES FR GB GR IT LI LU NL SE**

(71) Anmelder: **CIBA-GEIGY AG**
**Klybeckstrasse 141**
**CH-4002 Basel(CH)**

(72) Erfinder: **Ouadranti, Marco, Dr.**
**Spitalrain 7**
**CH-5200 Brugg(CH)**
Erfinder: **Maurer, Willy**
**Störklingasse 60**
**CH-4125 Riehen(CH)**

(54) **Synergistisches Mittel und Verfahren zur selektiven Unkrautbekämpfung.**

(57) Die Erfindung betrifft ein herbizides Mittel, enthaltend als Verbindung der Formel I N-[2-(Methoxycarbonyl)-phenyl]sulfonyl-N'-(4,6-bis-difluormethoxypyrimidin-2-yl)-harnstoff neben einer synergistisch wirksamen Menge eines weiteren Herbizids der Formel VI

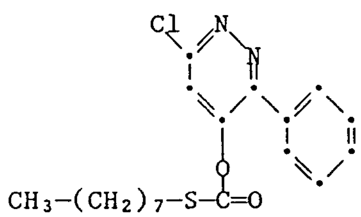

(VI)

oder
der Formel VII

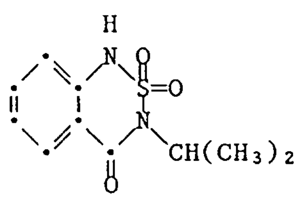

(VII),

Verfahren zur selektiven Bekämpfung von Unkräutern in Nutzpflanzenkulturen und die Verwendung dieser Mittel zur Bekämpfung von Unkräutern in Nutzpflanzenkulturen.

EP 0 608 009 A1

Die vorliegende Erfindung betrifft ein synergistisches Mittel, eine herbizide Wirkstoff-Kombination enthaltend. Das erfindungsgemässe Mittel eignet sich zur selektiven Unkrautbekämpfung in Nutzpflanzenkulturen, insbesondere in Mais.

Die Erfindung betrifft auch ein Verfahren zur Bekämpfung von Unkräutern in Nutzpflanzenkulturen, vorzugsweise in Mais, und die Verwendung diese neuen Mittels.

Aus EP-A 0084020 ist der N-[2-(Methoxycarbonyl)phenyl]sulfonyl-N'-(4,6-bis-difluormethoxy-pyrimidin-2-yl)-harnstoff der Formel I

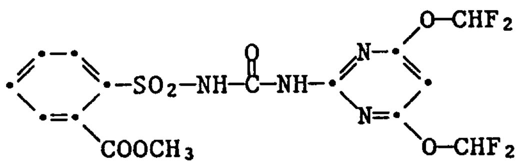

(I)

bekannt geworden. Dieser Wirkstoff besitzt gute selektiv-herbizide Wirkung gegen Unkräuter in Nutzpflanzenkulturen.

Andererseits sind die Verbindungen der Formeln VI und VII als herbizide Wirkstoffe mit teilweise guter Selektivität in Nutzpflanzenkulturen bekannt. Die Verbindungen der Formeln VI und VII sind teilweise im Handel erhältlich.

Als Verbindungen der Formeln VI und VII sind zu nennen:

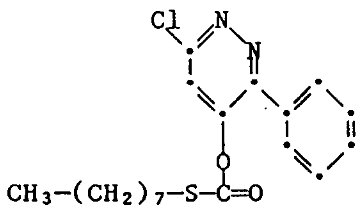

(VI),

6-Chlor-3-phenylpyridazin-4-yl S-Octyl Thiocarbonat; commmon name "Pyridate"; (beschrieben in "The Pesticide Manual, 8th ed. (1987), S. 731, Ed. C.R. Worthing; The British Crop Protection Council, Thornton Heath, GB); und

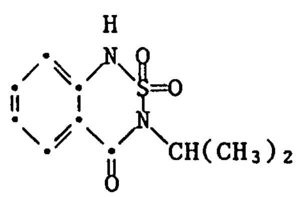

(VII),

3-Isopropyl-1H-2,1,3-benzothiadiazin-4(3H)-on 2,2-Dioxid; common name "Bentazone"; (beschrieben in "The Pesticide Manual, 8th ed. (1987), S. 63, Ed. C.R. Worthing; The British Crop Protection Council, Thornton Heath, GB).

Es hat sich nun überraschenderweise gezeigt, dass eine mengenmässig variable Kombination zweier Wirkstoffe, einerseits Wirkstoff I und andererseits eine Aktivsubstanz der Formel VI oder VII eine synergistische Wirkung entfaltet, die in vorteilhafter Weise zur Bekämpfung von Unkräutern in Nutzpflanzenkulturen, insbesondere in Mais, geeignet ist. Diese synergistischen Kombinationen sind zur Bekämpfung der Mehrzahl der wichtigen Unkräuter, insbesondere Maisunkräuter, geeignet, ohne dass dabei die Kulturpflanze geschädigt wird.

Es werden die Hauptunkräuter der Getreidekulturen, wie Arten der Monokotyledonengattungen Alopecurus, Avena und Setaria, sowie der Dikotyledonengattungen, Chrysanthenum, Galium, Sinapis, Stellaria und Veronica selektiv sowohl im Vorauflauf- als auch in Nachauflaufverfahren vernichtet.

Es wird daher gemäss der vorliegenden Erfindung ein neues synergistisches Mittel zur selektiven Unkrautbekämpfung vorgeschlagen, enthaltend als Wirkstoff N-[2-(Methoxycarbonyl)phenyl]sulfonyl-N'-(4,6-bis-difluormethoxypyrimidin-2-yl)-harnstoff der Formel I

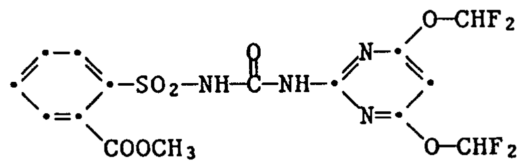

(I),

neben einer synergistisch wirksamen Menge eines weiteren Wirkstoffs der Formel VI

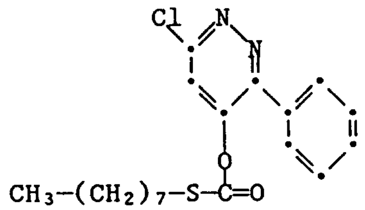

(VI)

oder
der Formel VII

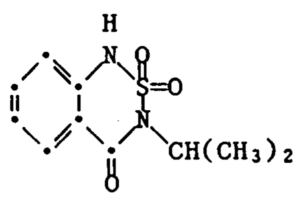

(VII);

sowie gewünschtenfalls weitere Hilfs- und/oder Trägerstoffe.

Die erfindungsgemässen Wirkstoffkombinationen können sowohl pre- als auch postemergent verwendet werden. Ausserdem kann das Saatgut der Nutzpflanze mit einer herbizid wirksamen Menge erfindungsgemässen Wirkstoffkombination behandelt werden (Samenbeizung). Bei der Aussaat der Nutzpflanzen wird so die erfindungsgemässe Wirkstoffkombination ausgebracht.

Insbesondere für die post-emergente Applikation geeignet ist die Kombination des Wirkstoffs I mit den Wirkstoffen der Formel VI oder VII.

Die erfindungsgemässen Wirkstoffkombinationen eignen sich besonders für Mais.

Es ist in hohem Masse überraschend, dass die Kombination des Wirkstoffs der Formel I mit einem Wirkstoff der Formeln VI oder VII nicht nur eine prinzipiell zu erwartende additive Ergänzung des Wirkungsspektrums auf die üblichen mit Mais vergesellschafteten Unkräuter hervorruft, sondern dass sie einen synergistischen Effekt erzielt, der die Wirkungsgrenzen der miteinander kombinierten Aktivsubstanzen unter zwei Aspekten erweitert.

Einmal werden die Aufwandmengen der Einzelverbindungen I, VI oder VII bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Mais zur Folge, wie sie für unbeabsichtigte Wirkstoffüberdosierung notwendig und erwünscht ist.

Die erfindungsgemässe Wirkstoffkombination enthält vorzugsweise die Wirkstoffe der Formel VI oder VII in gleichen Mengen oder in einem über Ueberschuss bezogen auf die Menge an Wirkstoff I.
Das Mischungsverhältnis kann in weiten Bereichen frei gewählt werden. Bevorzugt sind Verhältnisse von I zu VI oder VII von 1:1 bis 1:500, insbesondere 1:2 bis 1:200, besonders bevorzugt von 1:2 bis 1:100. Die optimalen Verhältnisse der einzelnen Wirkstoffkomponenten können durch biologische Versuche ermittelt werden.

Dabei können die Verhältnisse der einzelnen Wirkstoffkomponenten je nach Art des zu bekämpfenden Unkrauts und in Abhängigkeit von der jeweiligen Applikationsform variieren.

Die erfindungsgemässen Wirkstoffkombinationen zeigen eine ausgezeichnete Wirkung gegen Unkräuter, ohne die Nutzpflanzenkultur nennenswert zu beeinflussen bei 0,005 bis 3,0 kg vorzugsweise 0,01 bis 1,0 kg Aufwandmenge Aktivsubstanz je Hektar.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwaserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle vewendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materilien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphtidylcholin, Sphingomyelin, Phosphatidylinosit, Phosphatidylglycerin, Lysolecithin, Plasmalogene oder Cardiolipin, die man beispielsweise aus tierischen oder pflanzlichen Zellen, insbesondere Hirn, Herz, Lunge, Leber, Eidotter oder Sojabohnen gewinnen kann. Verwendbare Handelsmischungen sind z.B. Phosphatidylcholin-Mischungen. Synthetische Phospholipide sind z.B. Dioctanoylphosphatidylcholin und Dipalmititoylphosphatidylcholin.

Als oberflächenaktive Verbindungen kommen nichtionogene, kation-und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na-oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-laurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, 2er Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthyl-ammoniumbromid.

Die in der Formulierungstechnik gebräuchlichen Tenside sind u.a. in folgenden Publikationen beschrieben:

"1985 International Mc Cutcheon's Emulsifiers & Detergents", Glen Rock NJ USA, 1985",
"H. Stache, "Tensid-Taschenbuch", 2. Aufl., C. Hanser Verlag München, Wien 1981,
M. and J. Ash. "Encyclopedia of Surfactants", Vol. I-III, Chemical Publishing Co., New York, 1980-1981.

Die agrochemischen Zubereitungen enthalten in der Regel 0,1 bis 95 %, insbesondere 0,1 bis 80 %, Wirkstoffgemisch der Formeln I und VI oder VII, 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

| Emulgierbare Konzentrate | |
|---|---|
| Aktives Wirkstoffgemisch | 1 bis 20 %, bevorzugt 5 bis 10 % |
| oberflächenaktives Mittel: | 5 bis 30 %, vorzugsweise 10 bis 20 % |
| flüssiges Trägermittel: | 50 bis 94 %, vorzugsweise 70 bis 85 % |

| Stäube: | |
|---|---|
| Aktives Wirkstoffgemisch: | 0,1 bis 10 %, vorzugsweise 0,1 bis 1 % |
| festes Trägermittel: | 99,9 bis 90 %, vorzugsweise 99,9 bis 99 %. |

| Suspension-Konzentrate | |
|---|---|
| Aktives Wirkstoffgemisch: | 5 bis 75 %, vorzugsweise 10 bis 50 % |
| Wasser: | 94 bis 25 %, vorzugsweise 88 bis 30 % |
| oberflächenaktives Mittel: | 1 bis 40 %, vorzugsweise 2 bis 30 % |

| Benetzbare Pulver | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

| Granulate | |
|---|---|
| aktives Wirkstoffgemisch:<br>festes Trägermittel: | 0,5 bis 30 %, vorzugsweise 3 bis 15 %<br>99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Den beschriebenen erfindungsgemässen Mitteln lassen sich andere biozide Wirkstoffe oder Mittel beimischen. So können die neuen Mittel ausser den genannten Verbindungen der allgemeinen Formel I und der Formeln VI oder VII z.B. Insektizide, Fungizide, Bakterizide, Fungistatika, Bakteriostatika oder Nematizide zur Verbreiterung des Wirkungsspektrums enthalten.

Im Einzelnen lassen sich die erfindungsgemässen Mittel allgemein nach den folgenden Beispielen formulieren:

Formulierungsbeispiele

Beispiel F1:

Formulierungsbeispiele für synergistische Wirkstoffgemische der Formeln I und VI oder VII (% = Gewichtsprozent)

| a) Spritzpulver | a) | b) | c) | d) |
|---|---|---|---|---|
| Wirkstoff I und | 10 % | 20 % | 5 % | 30 % |
| einer der Wirkstoffe VI oder VII | 10 % | 40 % | 15 % | 30 % |
| Na-Ligninsulfonat | 5 % | 5 % | 5 % | 5 % |
| Na-Laurylsulfat | 3 % | - | 3 % | - |
| Na-Diisobutylnaphthalinsulfonat | - | 6 % | - | 6 % |
| Octylphenolpolyäthylenglykoläther 7-8 Mol AeO) | - | 2 % | - | 2 % |
| Hochdisperse Kieselsäure | 5 % | 27 % | 5 % | 27 % |
| Kaolin | 67 % | - | 67 % | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) |
|---|---|---|---|
| Wirkstoff I und | 5 % | 5 % | 12 % |
| einer der Wirkstoffe VI oder VII | 5 % | 20 % | 13 % |
| Octylphenolpolyäthylenglykoläther (4-5 Mol AeO) | 3 % | 3 % | 3 % |
| Ca-Dodecylbenzolsulfonat | 3 % | 3 % | 2 % |
| Ricinusölpolyglykoläther (36 Mol AeO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

| c) Stäubemittel | a) | b) | c) | d) |
|---|---|---|---|---|
| Wirkstoff I | 2 % | 4 % | 2 % | 4 % |
| einer der Wirkstoffe VI oder VII | 3 % | 4 % | 4 % | 8 % |
| Talkum | 95 % | - | 94 % | - |
| Kaolin | - | 92 % | - | 88 % |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Wirkstoff I und | 5 % | 3 % | 5 % |
| einer der Wirkstoffe VI oder VII | 5 % | 7 % | 15 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | a) | b) |
|---|---|---|
| Wirkstoff I und | 1,5 % | 3 % |
| einer der Wirkstoffe VI oder VII | 1,5 % | 5 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff I und | 20 % | 20 % |
| einer der Wirkstoffe VI oder VII | 20 % | 40 % |
| Aethylenglykol | 10 % | 10 % |
| Nonylphenolpolyäthylenglykoläther (15 Mol AeO | 6 % | 6 % |
| Na-Ligninsulfonat | 10 % | 10 % |
| Carboxymethylcellulose | 1 % | 1 % |
| 37 %ige wässrige Formaldehyd-Lösung | 0,2 % | 0,2 % |
| Silikonöl in Form einer 75 %igen wässriger Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Ein synergistischer Effekt liegt bei Herbiziden immer dann vor, wenn die herbizide Wirkung der Wirkstoffkombination I und VI oder VII grösser ist als die Summe der Wirkung der einzeln applizierten Wirkstoffe.

Die zu erwartende herbizide Wirkung We für eine gegebene Kombination zweier Herbizide kann (vgl. COLBY, S.R., "Calculating synergistic and antagonistic response of herbicide combinations", Weeds 15, Seiten 20-22, 1967) wie folgt berechnet werden:

$$We = X + \frac{Y \cdot (100-X)}{100}$$

Dabei bedeuten:

X = Prozent Wachstumshemmung bei Behandlung mit einem Herbizid I mit p kg Aufwandmenge pro Hektar im Vergleich zur unbehandelten Kontrolle (= 0 %).

Y = Prozent Wachstumshemmung bei Behandlung mit einem Herbizid VI oder VII mit q kg Aufwandmenge pro Hektar im Vergleich zur unbehandelten Kontrolle

We = Erwartete herbizide Wirkung (Prozent Wachstumshemmung im Vergleich zur unbehandelten Kontrolle) nach Behandlung mit Herbizidgemisch I und VI oder VII bei einer Aufwandmenge von p + q kg Wirkstoffmenge pro Hektar.

Ist die tatsächlich beobachtete Wirkung grösser als der zu erwartende Wert We, so liegt Synergismus vor.

Biologische Beispiele:

Beispiel B1: Preemergenter Versuch

Die Testpflanzensamen werden in Plastiktöpfe, die 0,5 l sterilisierte Ackererde enthalten, im Gewächshaus angesät. Einen Tag nach der Saat wird die Erdoberfläche mit einer wässrigen Dispersion der Wirkstoffkombination besprüht.

Die Aufwandmenge an Wirksubstanz wird durch geeignete Vedünnung des Konzentrats eingestellt. Man versprüht jeweils 50 ml Dispersion pro $m^2$. Die Testpflanzen werden im Gewächshaus bei täglicher Bewässerung weiterkultiviert. 20 Tage nach Saat und Applikation erfolgt die Auswertung. Registriert wird die prozentuale Wachstumshemmung im Vergleich zur unbehandelten Kontrolle. Als Massstab gilt folgende lineare Skala:

100 % = Pflanzen abgestorben
50 % = mittlere Wirkung
0 % = wie unbehandelte Kontrolle

Beispiel B2: Postemergenter Versuch

Die Testpflanzen werden in Plastiktöpfen, die 0,5 l sterilisierte Ackererde enthalten angezogen. Nach dem Auflaufen werden die Pflanzen im 2-3 Blattstadium (ca. 2 Wochen nach der Saat) mit einer wässrigen Dispersion der Wirkstoffkombinationen besprüht. Die Spritzbrühemenge beträgt 50 ml pro $m^2$. Die Aufwandmenge an Wirksubstanzen wird durch geeignete Verdünnung des Konzentrats eingestellt. Die Testpflanzen werden im Gewächshaus bei täglicher Bewässerung weiterkultiviert. 20 Tage nach der Applikation erfolgte die Auswertung. Der Schädigungsgrad der Pflanzen wird prozentual nach gleichem Massstab wie im preemergenten Versuch bewertet.

**Patentansprüche**

**1.** Herbizides Mittel enthaltend als Wirkstoff N-[2-(Methoxycarbonyl)phenyl]sulfonyl-N'-(4,6-bis-difluormethoxypyrimidin-2-yl)-harnstoff der Formel I

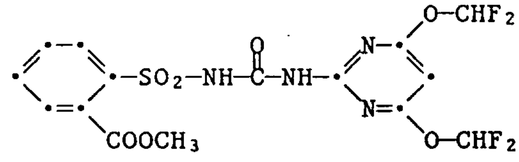

(I),

neben einer synergistisch wirksamen Menge eines weiteren Wirkstoffs der Formel VI

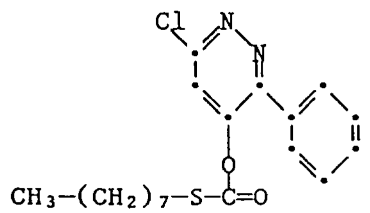

(VI)

oder
der Formel VII

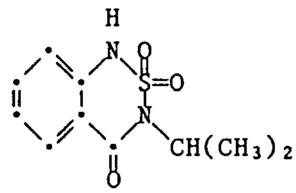

(VII);

sowie gewünschtenfalls weitere Hilfs- und/oder Trägerstoffe.

**2.** Saatgut welches mit einer herbizid wirksamen Menge eines Mittels gemäss Anspruch 1 behandelt worden ist.

**3.** Maissaatgut gemäss Anspruch 2.

**4.** Verfahren zur selektiven Bekämpfung von Unkräutern in Nutzpflanzenkulturen, dadurch gekennzeichnet, dass man eine herbizid wirksame Menge eines Mittels gemäss Anspruch 1 auf die Nutzpflanzenkultur oder deren Lebensraum einwirken lässt.

**5.** Verfahren gemäss Anspruch 4 zur selektiven pre- oder postemergenten Unkrautbekämpfung in Maiskulturen.

**6.** Verfahren gemäss Anspruch 5 zur preemergenten Unkrautbekämpfung in Maiskulturen, gekennzeichnet durch die Verwendung eines Mittels gemäss Anspruch 1.

**7.** Verfahren gemäss Anspruch 5 zur postemergenten Unkrautbekämpfung in Maiskulturen, gekennzeichnet durch die Verwendung eines Mittels gemäss Anspruch 1.

**8.** Verfahren zur selektiven Bekämpfung von Unkräutern in Nutzpflanzenkulturen, gekennzeichnet durch die Verwendung eines Saatgutes gemäss Anspruch 2 oder 3.

**Patentansprüche für folgenden Vertragsstaat : ES**

**1.** Verfahren zur selektiven Bekämpfung von Unkräutern in Nutzpflanzenkulturen, dadurch gekennzeichnet, dass man eine herbizid wirksame Menge eines Mittels enthaltend als Wirkstoff N-[2-(Methoxycarbonyl)-phenyl]sulfonyl-N'-(4,6-bis-difluormethoxypyrimidin-2-yl)-harnstoff der Formel I

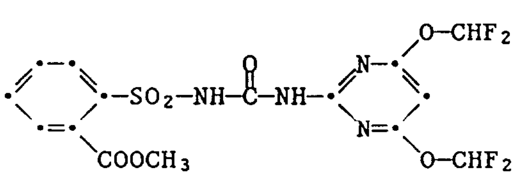

(I),

neben einer synergistisch wirksamen Menge eines weiteren Wirkstoffs der Formel VI

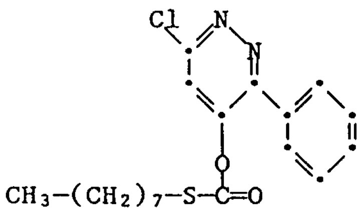

(VI)

oder
der Formel VII

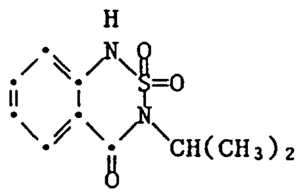

(VII)

auf die Nutzpflanzenkultur oder deren Lebensraum einwirken lässt.

**2.** Verfahren nach Anspruch 1 zur selektiven pre- oder postemergenten Unkrautbekämpfung in Maiskulturen.

**3.** Verfahren gemäss Anspruch 2 zur postemergenten Unkrautbekämpfung in Maiskulturen.

**4.** Verfahren zur Beizung von Saatgut, dadurch gekennzeichnet, dass man das Saatgut mit einer herbizid wirksamen Menge eines Mittels enthaltend als Wirkstoff N-[2-(Methoxycarbonyl)phenyl]sulfonyl-N'-(4,6-bis-difluormethoxypyrimidin-2-yl)-harnstoff der Formel I

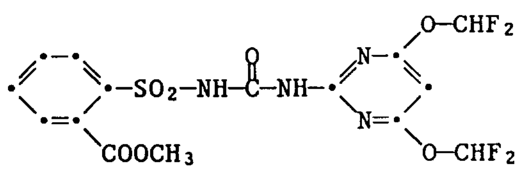

(I),

neben einer synergistisch wirksamen Menge eines weiteren Wirkstoffs der Formel VI

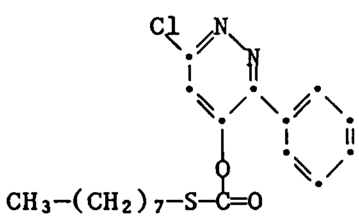

(VI)

oder
der Formel VII

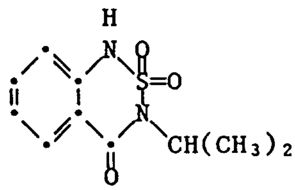

(VII)

behandelt.

**5.** Verfahren nach Anspruch 4 zur Beizung von Maissaatgut.

**6.** Verfahren zur Herstellung eines herbiziden Mittels, dadurch gekennzeichnet, dass man N-[2-(Methoxycarbonyl)phenyl]sulfonyl-N'-(4,6-bis-difluormethoxypyrimidin-2-yl)-harnstoff der Formel I

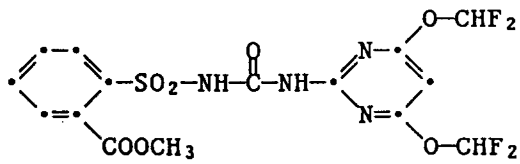

(I),

mit einer synergistisch wirksamen Menge eines weiteren Wirkstoffs der Formel VI

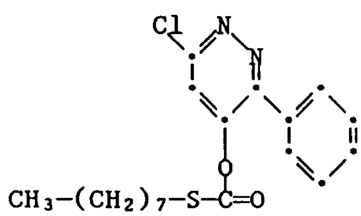

(VI)

oder
der Formel VII

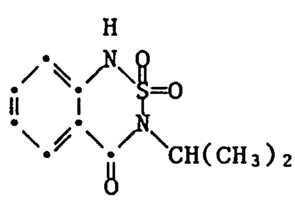

(VII)

sowie gewünschtenfalls mit weiteren Hilfs- und/oder Trägerstoffen intensiv vermischt.

Europäisches Patentamt

# EUROPÄISCHER RECHERCHENBERICHT

Nummer der Anmeldung
EP 94 10 5426

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.4) |
|---|---|---|---|
| A,D | EP-A-0 084 020 (CIBA-GEIGY)<br>* Ansprüche 1,12,22,23,26,27 *<br>----- | 1-8 | A01N47/36<br>//(A01N47/36,<br>47:06,43:88) |
| | | | **RECHERCHIERTE SACHGEBIETE (Int.Cl.4)** |
| | | | A01N |

Der vorliegende Recherchenbericht wurde für alle Patentansprüche erstellt

| Recherchenort | Abschlußdatum der Recherche | Prüfer |
|---|---|---|
| DEN HAAG | 9. Mai 1994 | Decorte, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)